# EUROPEAN PATENT APPLICATION

(11) **EP 0 827 104 A2**
(43) Date of publication of application: **04.03.1998**
(21) Application number: 97306443.9
(22) Date of filing: 22.08.1997
(51) Int. Cl.: G06K 11/18

(54) **Device and method for displaying scanning speed in hand scanner**

(30) Priority: 24.08.1996 KR 9635456
(71) Applicant: Samsung Electronics Co., Ltd., Suwon City, Kyungki-do (KR)
(72) Inventor: Jeong, Heung-Sup, Yongin-city, Kyungki-do (KR)
(74) Representative: Tunstall, Christopher Stephen

(57) **Abstract**

A display device for displaying the scanning speed of a hand scanner is described. An encoder 28 detects the scanning speed of the hand scanner. A microprocessor 26, 30 produces a series of display driving signals, in each case when the scanning speed exceeds a respective one of an increasing sequence of preset scanning speeds. A series of display elements 1-7 responsive to respective display driving signals indicate whether the scanning speed exceeds the respective preset scanning speeds.

## Description

### BACKGROUND OF THE INVENTION

The present invention relates generally to improvements in hand scanners.

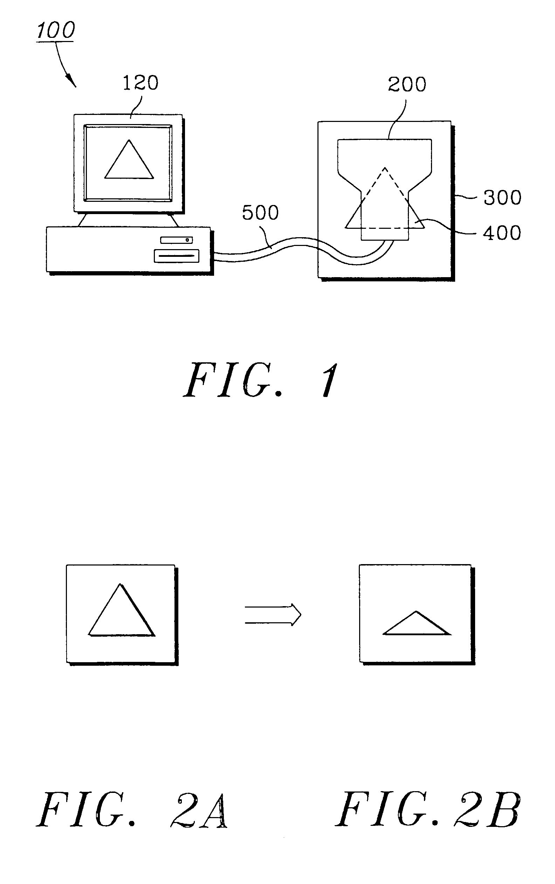

In general, a scanner reads an image of document optically and then electrically converts the image into digital data, transmitting it to a system capable of processing the image such as a computer. Fig. 1 is a schematic diagram showing the concept of scanning in a computer which displays image data received from a scanner on a screen. If a user scans a triangle 400 drawn on document 300 using the scanner 200, data relating to the triangle is produced and then the produced data is transmitted to a computer 100 through a communication line 500, to be displayed on the screen 120, in a sequential manner.

Figs. 2A and 2B show variation of an image according to variation of scanning speed. Fig 2A shows the figure which is displayed on the screen 120 when the figure 400 drawn on the document 300 is scanned at normal speed. Also, Fig. 2B shows the figure which is displayed on the screen 120 when the figure 400 is scanned at high speed. In the latter case, the figure may be reduced as illustrated in Fig. 2B.

As stated above, since the image can be changed by the scanning speed, normal speed should be maintained so as to input the contents of the original document without error. However, a user can only check whether or not the current speed is normal, low or high by guesswork or experience, but not exactly. For that reason, it is inconvenient to the user.

### SUMMARY OF THE INVENTION

Accordingly, it is an object of the present invention to provide an improved hand scanner.

According to the present invention, there is provided a display device for displaying the scanning speed of a hand scanner comprising:
means for detecting the scanning speed of the hand scanner;
control means for producing a display driving signal when the scanning speed exceeds a preset scanning speed; and
a display element responsive to the display driving signal for indicating whether the scanning speed exceeds the preset scanning speed.

Preferably, the control means is adapted to produce a series of display driving signals, in each case when the scanning speed exceeds a respective one of an increasing sequence of preset scanning speeds and comprising a series of display elements responsive to respective display driving signals for indicating whether the scanning speed exceeds the respective preset scanning speed.

The sequence of display elements is preferably arranged in the same order as their respective preset scanning speeds.

The control unit may further comprise a memory for storing data relating to a range of scanning speeds divided into multiple sub-ranges. The sub-ranges are bounded by the preset scanning speeds.

In one embodiment of the invention, only one display driving signal is produced corresponding to the highest of the preset scanning speeds which is lower than the detected scanning speed. In an alternative embodiment, all display driving signals corresponding to preset scanning speeds which are lower than the detected scanning speed are produced.

The means for detecting the scanning speed of the hand scanner may comprise:
an encoder mounted for rotation with a moving roller of the hand scanner and including a disc having a circumferential array of slits; and
a pulse waveform production unit including a light receiving unit and a light emitting unit, for outputting a pulse only when one of the slits passes between the light receiving unit and the light emitting unit.

The present invention also provides a method of displaying the scanning speed of a hand scanner comprising:
detecting the scanning speed of the hand scanner;
activating a display element when the scanning speed exceeds a preset scanning speed.

The method may comprise:
activating a series of display elements, in each case when the scanning speed exceeds a respective one of an increasing sequence of preset scanning speeds.

### BRIEF DESCRIPTION OF THE DRAWINGS

The present invention will now be described by way of example with reference to the accompanying drawings in which:
Fig. 1 is a schematic diagram showing the concept of scanning in a computer for displaying image data received from a hand scanner on a screen;
Figs. 2A and 2B show variation of an image according to variation of scanning speed;
Fig. 3A shows the construction of a scanner according to an embodiment of the present invention, Fig. 3B is a side view of the scanner showing the position of moving rollers 240a - 240c, and Fig. 3C is a top view illustrating construction of an encoder 270;
Fig. 4 shows detailed construction of a display in Fig. 3A according to an embodiment of the present invention;
Fig. 5 is a block diagram for showing a display device for displaying scanning speed according to an embodiment of the present invention; and
Fig. 6 is a flow chart showing procedure of displaying for displaying scanning speed according to an embodiment of the present invention.

### DETAILED DESCRIPTION OF THE PREFERRED EMBODIMENTS

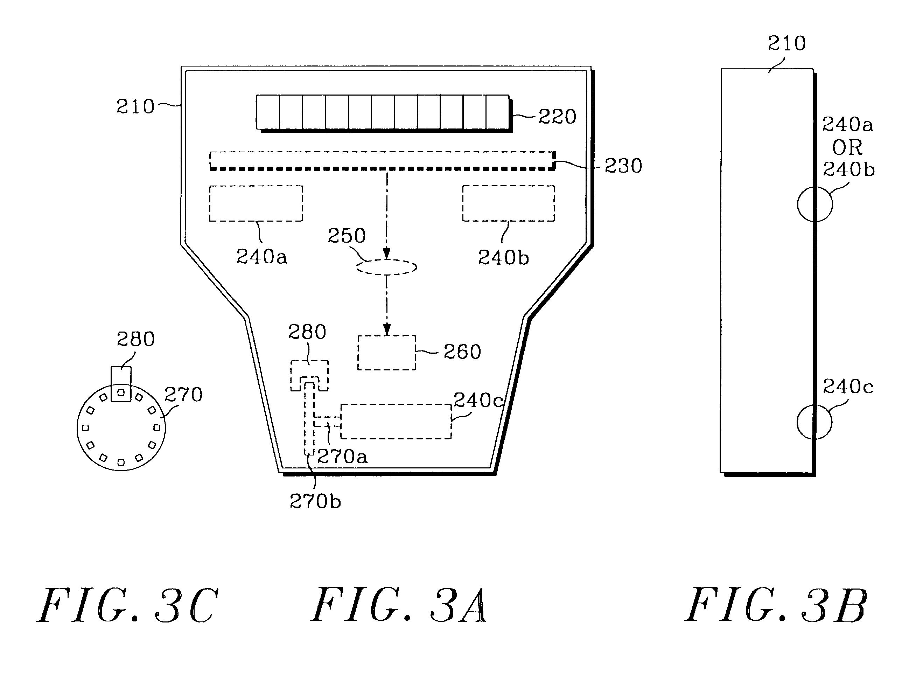

Fig. 3A shows the construction of a scanner according to an embodiment of the present invention. Components within a case 210 are represented by dotted lines. Also, a mirror 230 for reflection, a lens 250 and a charge coupled device CCD 260 correspond to the general optical units in the case 210. An encoder 270 and a photo coupler 280 act as a speed detection unit. Moving rollers 240a to 240c are incorporated within the scanner.

Further, Fig. 3B is a side view of the scanner showing the position of the moving rollers 240a to 240c. The encoder 270 includes a cental axis 270a at one side of the moving roller 240c located at the lower portion of the scanner and a disc 270b having a plurality of slits located at the upper portion of the central axis 270a.

Fig. 3C is a top view illustrating the construction of an encoder 270. The photo coupler 280 includes a light receiving unit and a light emitting unit and serves as a pulse waveform production unit for outputting a pulse only when the slits pass between the light receiving unit and the light emitting unit by rotation of the encoder 270 according to the rotation of the moving roller 240c. A display 220 comprises a plurality of light emitting diodes LEDs, and the LEDs are connected to the outside of the case 210 of the scanner.

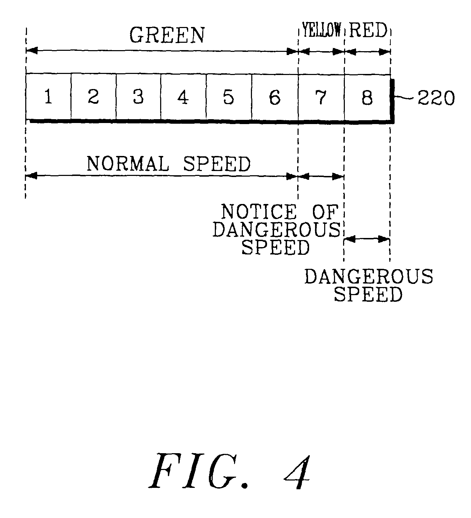

Fig. 4 shows the construction of the display in Fig. 3A according to an embodiment of the present invention. The display unit 220 includes eight LEDs 1-8 in which the first to sixth LEDs are green in colour, the seventh LED is yellow in colour and the eighth LED is red in colour. Each colour represents states such as normal speed, approaching dangerous speed and dangerous speed.

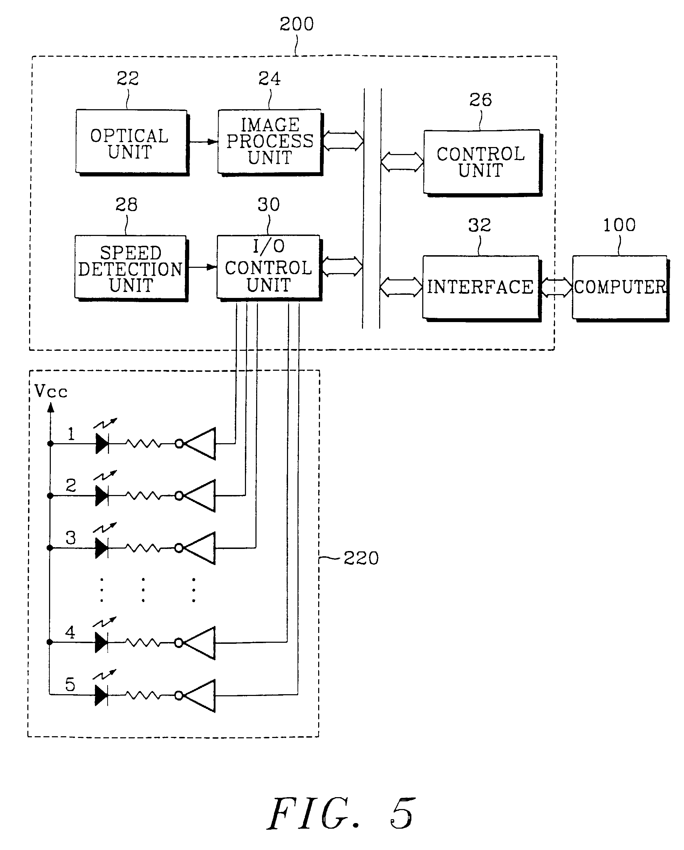

Fig. 5 is a block diagram showing a display device for displaying scanning speed according to an embodiment of the present invention. An optical unit 22 converts the image of the document reflected by the mirror 230 into an electric signal at the charge coupled device CCD 260 received through the lens 250. An image process unit 24 converts an analog signal outputted from the optical unit 22 into a digital signal and performs shading correction of the analog signal.

A control unit 26 (a one chip microprocessor) receives the image data output from the image process unit 24 and buffers the input image data within a memory, transmitting the buffered image data to a computer 100 through an interface unit 32. Also, the control unit 26 produces a display driving signal for sequentially turning on the LEDs, beginning with the first LED of the display unit 220 with increasing scanning speed detected from the speed detection unit 28. For the above, the control unit 26 includes a memory for storing data relative to the speed range which is divided into sub-ranges according to scanning speed. The control unit 26 operates corresponding LEDs of the display 220 in ones or groups. An input/output unit 30 (hereinafter, denoted as I/O unit) transmits a signal output from the speed detection unit 28 to the control unit 28. Further, the above I/O unit functions as a buffer for transmitting the display driving signal output from the control unit 26 to the display 220.

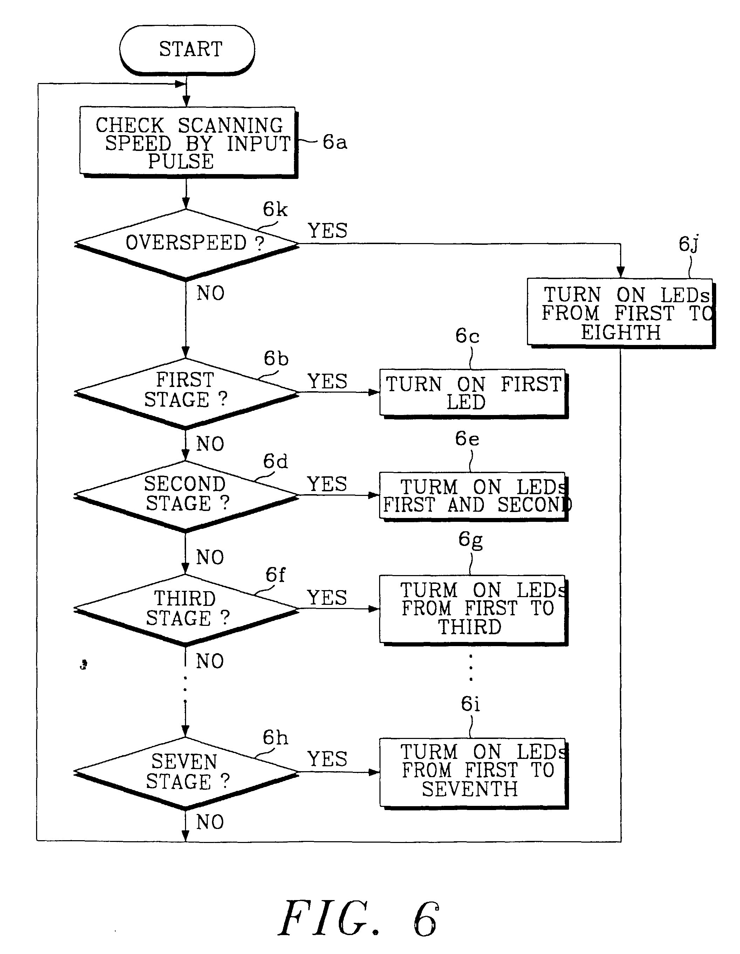

Fig. 6 is a flow chart showing the procedure of displaying scanning speed according to an embodiment of the present invention. At step 6a, the control unit 26 detects the scanning speed of the scanner 200 in operation. Thus, the control unit 26 proceeds to step 6k, thereby determining which step corresponds to the detected scanning speed in the speed range having the predetermined sub-ranges. When the speed is determined as an overspeed at step 6k, the control unit 26 proceeds to step 6j, turning on the LEDs from the first to the eighth.

However, when it is determined not to be an overspeed, the control unit 26 proceeds to step 6b, thereby checking whether or not the speed belongs to the first sub-range of the speed range. Thus, if it is determined that the speed belongs to the first sub-range, the control unit 26 proceeds to 6c, thereby turning on the first LED 1. In the meanwhile, if it is determined that the speed does not belong to the first sub-range, the control unit 26 proceeds to step 6d, checking whether or not the speed belongs to the second sub-range. If it is determined that the speed belongs to the second stage, the control unit 26 proceeds to 6e, thereby turning on the first LED 1 and the second LED 2 (or, in an alternative embodiment, just the second LED 2). On the other hand, if it is determined that the speed does not belong to the second sub-range, the control unit 26 proceeds to step 6f, thereby checking whether or not the speed belongs to the third sub-range. If so, the first to third LEDs 1-3 are turned on (or just the third LED 3).

Therefore, the LEDs are turned on in sequence according to the above process, and if the speed increases, step 6h is regarded as being belonged to the seventh stage in the long run, thereby turning on all LEDs from the first LED 1 to the seventh LED 7 at step 6i (or just the seventh LED 7).

As stated above, the present invention has advantages in that the scanned data can be prevented from damage caused by overspeed because it displays the scanning speed of the scanner visually, enabling the user to control the scanning speed.

## Claims

1. A display device for displaying the scanning speed of a hand scanner comprising:
means for detecting the scanning speed of the hand scanner;
control means for producing a display driving signal when the scanning speed exceeds a preset scanning speed; and
a display element responsive to the display driving signal for indicating whether the scanning speed exceeds the preset scanning speed.

2. A display device according to claim 1 in which the control means is adapted to produce a series of display driving signals, in each case when the scanning speed exceeds a respective one of an increasing sequence of preset scanning speeds and comprising a series of display elements responsive to respective display driving signals for indicating whether the scanning speed exceeds the respective preset scanning speed.

3. A display device according to claim 2 in which the sequence of display elements is arranged in the same order as their respective preset scanning speeds.

4. A display device according to claim 2 or claim 3 in which the control unit further comprises a memory for storing data relating to a range of scanning speeds divided into multiple sub-ranges.

5. A display device according to claim 4 in which the sub-ranges are bounded by the preset scanning speeds.

6. A display device according to any one of claims 2-5 in which only one display driving signal is produced corresponding to the highest of the preset scanning speeds which is lower than the detected scanning speed.

7. A display device according to any one of claims 2-5 in which all display driving signals corresponding to preset scanning speeds which are lower than the detected scanning speed are produced.

8. A display device according to any preceding claim in which the means for detecting the scanning speed of the hand scanner comprises:
an encoder mounted for rotation with a moving roller of the hand scanner and including a disc having a circumferential array of slits; and
a pulse waveform production unit including a light receiving unit and a light emitting unit, for outputting a pulse only when one of the slits passes between the light receiving unit and the light emitting unit.

9. A method of displaying the scanning speed of a hand scanner comprising:
detecting the scanning speed of the hand scanner;
activating a display element when the scanning speed exceeds a preset scanning speed.

10. A method according to claim 9 comprising:
activating a series of display elements, in each case when the scanning speed exceeds a respective one of an increasing sequence of preset scanning speeds.

11. A hand scanner including a display device according to any one of claims 1-8 or adapted to perform a method according to claim 9 or claim 10.

12. A display device for displaying the scanning speed of a hand scanner as described herein with reference to and as illustrated in the accompanying drawings.

13. A method of displaying the scanning speed of a hand scanner as described herein with reference to and as illustrated in the accompanying drawings.
